(19) Europäisches Patentamt / European Patent Office / Office européen des brevets

(11) **EP 2 271 438 B1**

(12) **FASCICULE DE BREVET EUROPEEN**

(45) Date de publication et mention
de la délivrance du brevet:
**08.11.2017 Bulletin 2017/45**

(21) Numéro de dépôt: **09730734.2**

(22) Date de dépôt: **10.04.2009**

(51) Int Cl.:
**B05D 3/00** *(2006.01)*     **B05D 3/10** *(2006.01)*
**B05D 5/02** *(2006.01)*     **C09D 133/06** *(2006.01)*
**C09D 125/06** *(2006.01)*     **B82B 3/00** *(2006.01)*

(86) Numéro de dépôt international:
**PCT/EP2009/054354**

(87) Numéro de publication internationale:
**WO 2009/125018 (15.10.2009 Gazette 2009/42)**

(54) **RECOUVREMENT D'UN SUBSTRAT PAR UN FILM DE POLYMERE STABLE EN MILIEU LIQUIDE**

ABDECKUNG EINES SUBSTRATS MIT EINER POLYMERFOLIE ZU SEINER STABILITÄT IN EINEM FLÜSSIGEN MEDIUM

COVERING A SUBSTRATE WITH A POLYMER FILM THAT IS STABLE IN A LIQUID MEDIUM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **10.04.2008 FR 0852408**

(43) Date de publication de la demande:
**12.01.2011 Bulletin 2011/02**

(73) Titulaire: **Centre National de la Recherche Scientifique (C.N.R.S.)**
**75016 Paris (FR)**

(72) Inventeurs:
• **KEKICHEFF, Patrick**
  **F-67000 Strasbourg (FR)**
• **CLAUZEL, Maryline**
  **F-68470 Fellering (FR)**

(74) Mandataire: **Regimbeau**
**20, rue de Chazelles**
**75847 Paris Cedex 17 (FR)**

(56) Documents cités:
**WO-A-99/47253     WO-A-2007/095158**

EP 2 271 438 B1

**Description**

La présente invention concerne un procédé de recouvrement d'un substrat par un film de polymère ainsi que le substrat susceptible d'être obtenu par un tel procédé. Ce procédé permet d'obtenir un film de polymère qui reste stable même en environnement liquide ou vapeur, que ce soit dans un milieu statique ou en mouvement comme dans un flux de liquide.

Le revêtement de surface par un film de polymère est utilisé dans de nombreux domaines pour protéger un substrat du milieu extérieur ou pour modifier ses propriétés de surface.

Ainsi, un traitement anticorrosion ou antibactérien peut être obtenu notamment par recouvrement d'un substrat par un film de polymère. De même, des appareils ou composants sensibles, comme notamment des senseurs ou des instruments optiques, peuvent être recouverts d'un film protecteur de polymère pour les préserver du milieu extérieur et notamment pour conférer une protection anti-rayures ou anti-reflets.

Différentes techniques de prétraitement de la surface du substrat, avant le dépôt du film de polymère, existent actuellement pour permettre d'améliorer l'ancrage et l'adhérence du film de polymère sur le substrat. On peut citer par exemple un prétraitement par plasma froid, sous atmosphère d'eau, d'argon ou d'air par exemple, permettant d'activer la surface du substrat en la rendant hydrophile notamment, qui peut être éventuellement suivi d'une silanisation en phase gazeuse ou liquide, ce qui permet de greffer des groupements silanes sur la surface du substrat.

Cependant, ces différentes techniques impliquent de modifier les propriétés physico-chimiques et la nature chimique même de la surface du substrat.

Par ailleurs, le prétraitement par plasma froid nécessite des temps de mise en oeuvre souvent très longs.

Dans le cas particulier de la silanisation, il est difficile de bien contrôler la densité et l'homogénéité de silanes greffés sur la surface du substrat, le silane présentant le désavantage supplémentaire d'être plutôt corrosif. De plus, le choix du type de silane utilisé se fera en fonction de la nature chimique du polymère.

En outre, ces méthodes ne permettent pas toujours une bonne adhérence du film de polymère sur le substrat, en particulier en environnement vapeur ou liquide et notamment lors de l'immersion du substrat dans un milieu liquide.

En effet, de telles méthodes n'empêchent pas la formation de défauts, trous ou cavités microscopiques au niveau de l'interface film de polymère-substrat. L'infiltration de vapeur ou de liquide est alors permise au niveau de cette interface film de polymère-substrat ce qui déstabilise au niveau local l'ancrage des chaînes polymériques sur le substrat conduisant à terme au démouillage d'abord mésoscopique puis à la délamination finale macroscopique du film de polymère.

La présente invention a donc pour objet un nouveau procédé de recouvrement d'un substrat par un film de polymère caractérisé en ce que, préalablement au dépôt dudit film de polymère, des nanoparticules sont adsorbées de manière électrostatique sur la surface dudit substrat à recouvrir.

WO 2007/095 158 décrit un procédé de préparation de substrat ayant une surface poreuse pour une application en chromatographie par formation de multicouches alternées de polyélectrolyte et de nanoparticules de charges opposées, suivie de l'élimination des couches intermédiaires de polyélectrolyte pour ne garder que les nanoparticules. D'une part, ce procédé n'a pas vocation à obtenir un substrat revêtu d'un film de polymère stable puisque le polymère est destiné à être éliminé et d'autre part, le substrat concerné est de taille micrométrique, notamment comprise entre 1 et 250 $\mu$m.

De même, WO 99/47 253 décrit la fabrication de particules enrobées de multicouches alternées de polyélectrolyte et de nanoparticules de charges opposées. Cependant, ce procédé vise notamment à préparer des « coquilles vides » pour servir de vecteur de médicament, ces « coquilles » étant obtenues par élimination du substrat et éventuellement des couches de polyélectrolytes. Ce document ne vise donc pas l'obtention d'un dépôt stable d'un film de polymère sur un substrat comme dans le cadre de la présente invention. Par ailleurs, les substrats utilisés dans ce document ont un diamètre moyen inférieur à 15 $\mu$m.

Par « nanoparticules », on entend des particules solides de tailles nanométriques, c'est-à-dire dont au moins une des dimensions est nanométrique (et de préférence toutes), c'est-à-dire inférieure au micromètre.

Par « substrat », on entend notamment un support solide destiné à être recouvert par le film de polymère, de taille macroscopique, c'est-à-dire dont au moins une dimension du substrat est supérieure au millimètre, et notamment supérieure au centimètre, et de préférence, toutes les dimensions du substrat sont supérieures au millimètre, et notamment au centimètre.

Ainsi, par exemple, dans le cas d'une sphère, le diamètre devra être supérieur à 1 mm ; dans le cas d'un parallélépipède, au moins la longueur, la largeur ou la hauteur devra être supérieure à 1 mm ; dans le cas d'un tuyau ou d'un cylindre, au moins le diamètre ou la longueur devra être supérieur à 1 mm.

Par « polyélectrolyte », on entend, au sens de la présente invention, un polymère dont le motif de répétition porte au moins un groupe électrolyte, un électrolyte désignant un groupe qui est conducteur ionique lorsqu'il est placé dans l'eau. Ainsi, en solution dans un solvant polaire comme l'eau, le polyélectrolyte se dissocie faisant apparaître des charges sur son squelette et des contre-ions en solution. Le polyélectrolyte peut être composé d'un ensemble de groupes électrolytes identiques ou différents.

Par « adsorbées de manière électrostatique », on entend que les nanoparticules se fixent sur la surface du substrat au moyen essentiellement d'interactions électrostatiques, c'est-à-dire dépourvues essentiellement de liaisons covalentes. De manière simplifiée, les interactions électrostatiques sont des interactions entre charges opposées et peuvent être en particulier des interactions entre charges électriques, des interactions multipolaires, des interactions hydrophobes, des liaisons hydrogène, des images électriques, des corrélations ion-ion ou leurs combinaisons. Des interactions de van der Waals ou des phénomènes de complexation peuvent également intervenir permettant de renforcer l'adsorption des nanoparticules sur le substrat.

En effet, les interactions en milieu liquide sont très complexes et résultent de la combinaison de plusieurs phénomènes. Ainsi, l'interface d'un matériau plongé dans un milieu liquide se charge électriquement et s'entoure non seulement d'une distribution de contre-ions (ions portant une charge électrique de signe opposé à celui de la charge électrique de l'interface) mais aussi d'une distribution de co-ions (ions de même signe que celui de l'interface). Les gradients de concentration de ces ions à partir de l'interface chargée dépendent de plusieurs paramètres. En solution aqueuse, on peut citer le pH de la solution, la force ionique, la valence des ions présents, la nature chimique des ions (qui influencera leur hydratation ; série de Hofmeiester), leur taille, les interactions dipolaires et multipolaires, mais aussi la possibilité d'adsorption de ces ions sur l'interface (couche de Stern, couche électrique diffuse), le partage d'eau d'hydratation de ces ions avec l'eau d'hydratation de l'interface, la complexation de l'interface, les liaisons hydrogène, les forces hydrophobes, sans oublier le rôle du confinement du film liquide auprès de l'interface, qui induit entre autre des corrélations de position ion-ion, et ainsi des forces qui peuvent devenir attractives à courte portée même si les ions portent une charge électrique de même signe que l'interface chargée. La complexité de ces phénomènes crée donc une balance subtile entre les interactions, si bien que des nanoparticules chargées en solution peuvent interagir de manière très diverse avec le substrat et s'adsorber dans des conditions de solution que l'homme du métier sait bien choisir selon la nature des nanoparticules utilisées et du substrat donné.

Dans le procédé de l'invention, il semblerait que l'adsorption de nanoparticules sur la surface du substrat à recouvrir crée une rugosité nanométrique locale contrôlée en tout point de la surface du substrat créant de nombreux points d'ancrage pour le polymère au niveau microscopique. Dans ces conditions, le film de polymère peut épouser parfaitement la surface du substrat, quelle que soit sa forme ou sa topographie. Ainsi le substrat peut avoir une géométrie plane, courbe ou accidentée avec des variations de hauteurs importantes ou la présence d'arêtes ou de creux, il peut être lisse ou rugueux et peut présenter des imperfections. Il peut également être envisagé de revêtir un substrat ayant une surface poreuse.

Le film de polymère adhère alors parfaitement au substrat en tout point de sa surface, en évitant la formation de cavités, creux, trous ou défauts microscopiques, et reste donc stable en environnement vapeur ou liquide, que ce soit dans un environnement statique ou dans un écoulement fluide.

Ainsi, il semble que ce soit par l'amélioration des propriétés locales de l'ancrage du film de polymère sur le substrat que le procédé de l'invention permet d'obtenir des films de polymère stables même en environnement liquide ou vapeur.

Dans ces conditions, les propriétés chimiques du polymère n'ont pas besoin d'être modifiées pour permettre l'ancrage du film sur le substrat, cet ancrage étant de nature essentiellement physique et non chimique, ce qui permet de recouvrir le substrat avec tout type de polymère et de conserver les propriétés fonctionnelles du polymère.

De même, la nature chimique du substrat ainsi que sa forme ne sont pas modifiées par le procédé de l'invention.

Ce procédé est donc particulièrement attractif car il peut s'appliquer à tout type de substrat et à tout type de polymère pour une mise en oeuvre simple et un faible coût.

En particulier, le substrat pourra comprendre une surface à recouvrir métallique comprenant notamment de l'acier, de l'acier inoxydable, un métal tels que l'aluminium, l'or, l'argent, le fer, le plomb, le cuivre, le zinc, le nickel, le titane, le tungstène, le chrome, le platine, le cobalt, le zirconium, le molybdène, l'étain, le gallium, le ruthénium, l'yttrium et le manganèse, un alliage tel que le laiton ou le bronze, ou un mélange de ceux-ci ; et/ou minérale comprenant notamment de la pouzzolane, des argiles, du sable, des graviers, de la perlite, de la vermiculite, des laines minérales, du graphite ou un aluminosilicate tel que le mica, du silicium, du verre, un oxyde métallique tel que le saphir, ou un mélange de ceux-ci ; et/ou polymérique comprenant notamment du polytétrafluoroéthylène (plus connu sous le nom de teflon) (PTFE), du polydiméthylsiloxane (PDMS), du polycarbonate (PC), de la résine époxy ou du poly(chlorure de vinyle) (PVC) ; et/ou organométallique ; et/ou organique comme de la cellulose, du bois et ses dérivés comme des fibres ou de l'écorce, ou des coques de fruits et écorces telles qu'une coque de noix de coco ; et/ou en céramique.

Dans un mode de réalisation particulier, le substrat pourra comprendre une surface à recouvrir métallique comprenant de l'acier, de l'acier inoxydable, un métal tels que l'aluminium, l'or, l'argent, le fer, le plomb, le cuivre, le zinc, le nickel, le titane, le tungstène, le chrome, le platine, le cobalt, le zirconium et le manganèse ou un mélange de ceux-ci, et/ou une surface à recouvrir minérale comprenant notamment un aluminosilicate tel que le mica, du silicium, du verre, un oxyde métallique tel que le saphir, ou un mélange de ceux-ci.

Ladite surface à recouvrir pourra avoir une superficie supérieure à 1 mm$^2$, en particulier supérieure à 1 cm$^2$.

Elle pourra consister en un domaine unique de la surface du substrat (domaine éventuellement ajouré) ou au contraire en un ensemble de plusieurs domaines disjoints entre eux, recouvrant donc certaines zones du substrat.

Le procédé de l'invention pourra notamment être doublement intéressant dans certains types de dépôt du film de polymère pour obtenir des domaines de surface recouverts ajourés ou disjoints car il pourra permettre à la fois d'accrocher suffisamment le film aux endroits désirés de la surface et d'éliminer de manière satisfaisante les résidus de polymère restant au niveau des zones où le polymère n'est pas souhaité.

Ainsi, dans le cas notamment d'un dépôt d'un matériau polymérique photosensible (comme des colloïdes de latex) suivi d'une exposition à la lumière (par exemple celle d'un laser de longueur d'onde proche de la sensibilité spectrale du matériau, que ce soit dans l'ultraviolet UV, dans le visible, ou dans l'infra rouge IR, qui permet par exemple de faire coalescer les colloïdes de latex entre eux et de réaliser un film continu dans la zone exposée par la lumière), les zones exposées à la lumière pourront acquérir une structure différente (par exemple film continu plutôt que colloïdes sphéroïdes adsorbés) et/ou des propriétés physicochimiques différentes (par exemple degré d'hydrophilicité ou d'hydrophobicité) de celles de la zone non exposée à la lumière. Ainsi, par un choix des conditions de lavage de pH dictées notamment par les points isoélectriques respectifs des nanoparticules et du substrat utilisés, en plus d'autres critères décrits dans ce document par ailleurs, la désorption du matériau polymérique dans les zones non souhaitées (par exemple zones non exposées à la lumière) pourra être favorisée et de ce fait, la présence de résidus polymériques dans ces zones sera alors efficacement éliminée, alors que ce même matériau pourra rester accroché au substrat dans les zones souhaitées, son adhésion au substrat en étant d'ailleurs renforcée. Notre invention renforce ainsi doublement le contraste en agissant à la fois sur les deux zones (exposées et non exposées à la lumière) puisqu'il renforce les effets antagonistes, en créant sur le substrat un revêtement stable en solution aqueuse et/ou organique, avec des motifs de structure et/ou de propriétés physicochimiques différentes dont la taille et la répartition spatiales sur le substrat sont contrôlées. Un tel procédé permettant la création de film avec « pattern » pourra avantageusement être mis en avant dans le domaine de l'imprimerie ou dans le domaine biomédical pour créer notamment un « laboratoire sur puce » (communément appelé « lab on a chip »).

Selon un mode de réalisation particulier de l'invention, la surface du substrat sera exempte de polyélectrolyte.

Le substrat pourra être de forme quelconque et en particulier pourra avoir une surface à recouvrir plane, en forme d'anneau, de fibre, de tube creux, de tige, de cylindre, de sphère, de polyèdre, la forme pouvant être régulière ou irrégulière, creuse ou avec des protubérances ou des arêtes, concave ou convexe.

En particulier, le substrat pourra être un instrument optique, tel qu'un miroir, une lentille ou un atténuateur, ou un senseur, tel qu'un biosenseur ou un transistor organique à effet de champ. Il pourra s'agir également d'un tuyau, notamment métallique tel qu'en acier ou en aluminium, ou d'une plaque ou d'un cylindre, notamment une plaque ou un cylindre utilisé en imprimerie.

Par « atténuateur », on entend un dispositif permettant d'absorber en partie la lumière.

Par « senseur », on entend un dispositif capable de détecter ou de doser une molécule (analyte) en phase gazeuse ou liquide, telle que des ions métalliques qui peuvent être toxiques, des sucres dans le sang notamment pour les sujets diabétiques, des protéines, des brins d'ADN ou encore du trinitrotoluène (TNT) dans le cadre de la détection de mines anti-personnelles.

L'efficacité de ces senseurs repose généralement sur les propriétés d'un film de polymère qui les recouvrent en partie et qui permet la détection de l'analyte, notamment par affinité chimique avec celui-ci.

Il est donc important de pouvoir déposer des films de polymères qui restent stables dans le temps, même en milieu vapeur ou liquide, et ce, sans que les propriétés physico-chimiques du film ne soient altérées par un traitement chimique par exemple.

A titre de senseur, on peut citer notamment les biosenseurs et les transistors organiques à effet de champ.

Par « biosenseur », on entend un senseur permettant de détecter des molécules biologiques, telles que de l'ADN, de l'ARN, des protéines ou encore des sucres.

Par « transistor organique à effet de champ », on entend un dispositif comprenant successivement une électrode métallique, une couche isolante, qui peut être à base d'oxyde de silicium ou de plastique isolant, et une couche organique semiconductrice (polymère conjugué) prise en sandwich entre deux électrodes métalliques.

Le fonctionnement d'un tel senseur repose sur un changement des caractéristiques électriques en présence de l'analyte à doser. Le problème majeur que rencontrent ces dispositifs est leur utilisation difficile en milieu aqueux du fait, en grande partie, de la délamination du film de polymère.

Un tel problème pourrait donc être résolu avec le procédé de la présente invention et permettrait ainsi la détection d'analytes même en solution.

La taille moyenne des nanoparticules utilisées dans le procédé de l'invention est comprise avantageusement entre 1 et 200 nm, notamment entre 2 et 200 nm, de préférence entre 3 et 50 nm, et encore de préférence entre 3 et 20 nm. Ces nanoparticules peuvent être en particulier de forme substantiellement sphérique (dans ce cas la taille des nanoparticules correspond à leur diamètre), et présenter notamment des facettes cristallines et/ou amorphes.

Les nanoparticules peuvent être également des nanotubes. Dans ce cas, la taille des nanoparticules définie ci-dessus correspond au diamètre interne des nanotubes, ces derniers pouvant avoir une longueur d'au moins 200nm jusqu'à 1 cm, avantageusement de 200 nm à 1 mm, et de préférence de 200 nm à 1 μm. Ces nanotubes sont intéressants notamment pour leurs propriétés mécaniques permettant le renforcement de la tenue mécanique (fibres, matériaux composites, films minces), leurs propriétés électriques conductrices ou semi-conductrices, leurs propriétés d'émission à effet de champ, leurs propriétés optiques en optique ultra-rapide par exemple, la ségrégation de molécules gazeuses ou liquides, d'ions comme membrane, filtration.

Les nanoparticules pourront être choisies parmi des nanoparticules à base de carbone, notamment de noir de carbone ou de graphite ; et/ou des nanoparticules à base de silicium ; et/ou des nanoparticules à base de métal tels que l'aluminium, l'argent, le cadmium, le cérium, le chrome, le cobalt, le cuivre, l'étain, le fer, le gallium, le manganèse, le nickel, l'or, le palladium, le platine, le plomb, le ruthénium, le sélénium, le soufre, le titane, le thorium, le tungstène, l'yttrium, le zinc, le zirconium, et leurs mélanges et alliages ; et/ou des nanoparticules à base d'oxyde, d'hydroxyde ou de carbonate minéral, notamment métallique, tel que l'oxyde de cérium, l'oxyde de titane, l'oxyde de silicium tel que la silice, l'oxyde d'aluminium, l'oxyde d'yttrium, l'hydroxyde d'aluminium, l'oxyde de zirconium, l'oxyde d'yttrium, le carbonate d'yttrium, l'oxyde de fer, l'oxyde d'or, l'oxyde d'argent, l'oxyde de palladium, l'oxyde de soufre, l'oxyde de sélénium, l'oxyde de cadmium, l'oxyde de thorium ou encore l'oxyde de chrome ; des nanoparticules organométalliques ;des nanoparticules polymériques telles que des nanoparticules de latex, naturel ou synthétique, de polymère de coordination comme le bleu de Prusse et analogues, ou de biopolymères comme la chitine ; des nanoparticules à base de céramique tel que le nitrure de silicium ; des nanoparticules à base d'argile telle que les smectites, les kaolins, les illites, les chlorites ou les attalpugites ; et/ou des nanoparticules à base de nanotubes pouvant être hybrides et/ou fonctionnalisés, notamment à base de carbone, de nitrure de bore, de sulfure de molybdène, de sulfure de tungstène, de sulfure de cuivre, de chlorure de nickel, de chlorure de cadmium ou d'iodure de cadmium.

Ces nanoparticules pourront donc également jouer un rôle de pigment comme notamment les nanoparticules d'oxyde métallique (tel que l'oxyde de titane), organiques ou organométalliques, ce qui peut présenter un intérêt dans le cas du dépôt d'un film de polymère transparent.

Dans un mode de réalisation particulier, les nanoparticules pourront être choisies parmi des nanoparticules d'oxyde minéral telles que l'oxyde de cérium, l'oxyde de titane, l'oxyde de silicium, l'oxyde d'aluminium, l'oxyde de zirconium ou encore l'oxyde de chrome, et des nanoparticules polymériques.

Par « nanoparticules polymériques », on entend des nanoparticules constituées d'un polymère tel que le latex, naturel ou synthétique.

De manière avantageuse, les nanoparticules seront choisies parmi des nanoparticules à base d'oxyde, d'hydroxyde ou de carbonate minéral, notamment métallique, tel que l'oxyde de cérium, l'oxyde de titane, l'oxyde de silicium, l'oxyde d'aluminium, l'hydroxyde d'aluminium, l'oxyde de zirconium, l'oxyde d'yttrium, le carbonate d'yttrium, l'oxyde de fer, l'oxyde d'or, l'oxyde d'argent, l'oxyde de palladium, l'oxyde de soufre, l'oxyde de sélénium, l'oxyde de cadmium, l'oxyde de thorium ou encore l'oxyde de chrome.

De manière également avantageuse, les nanoparticules seront des nanoparticules d'oxyde minéral, telles que l'oxyde de cérium, l'oxyde de titane, l'oxyde de silicium telle que la silice, l'oxyde d'aluminium, l'oxyde de zirconium ou encore l'oxyde de chrome, et en particulier, seront des nanoparticules d'oxyde de cérium ou de silice, et avantageusement d'oxyde de cérium.

De préférence, les nanoparticules seront substantiellement sphériques.

De façon avantageuse, les nanoparticules recouvrent au moins 2%, de préférence entre 5 et 70 %, de préférence entre 20 et 40% et encore de préférence environ 30% de la surface du substrat à recouvrir.

Ce taux de recouvrement du substrat par les nanoparticules peut être mesuré notamment selon les deux manières suivantes :

- par imagerie à force atomique, en scannant la surface du substrat pour visualiser les nanoparticules et ainsi les dénombrer par des méthodes d'analyse de l'image, ou
- par mesure de l'indice de réfraction de la couche adsorbée de nanoparticules sur le substrat en utilisant un appareil de mesure des forces de surfaces (Surface Force Apparatus). En effet, l'indice de réfraction d'une nanoparticule en volume étant connu (par exemple, par mesure de l'incrément dn/dc, c'est-à-dire de la variation de l'indice de réfraction en fonction de la variation de la concentration volumique en nanoparticules), le taux de recouvrement en est déduit.

Ces deux méthodes donnent des résultats équivalents ce qui permet de confirmer les résultats obtenus en effectuant deux mesures différentes pour le taux de recouvrement.

Dans un mode de réalisation préféré, l'adsorption des nanoparticules est réalisée par immersion du substrat dans une dispersion desdites nanoparticules dans un solvant, et de préférence dans une solution aqueuse, ou par pulvérisation des nanoparticules sur la surface libre du substrat à recouvrir, éventuellement suivie par une étape de lavage du substrat et par une étape de séchage.

Lorsque l'adsorption des nanoparticules est réalisée par immersion, le temps d'immersion du substrat pourra être compris avantageusement entre 10 secondes et 10 heures, de préférence entre 1 minute et 1 heure, et encore de préférence entre 1 et 10 minutes.

En effet, en solution aqueuse, les nanoparticules sont chargées électriquement et peuvent donc adhérer de manière électrostatique et irréversible sur la surface du substrat à recouvrir qui est également chargée électriquement en solution aqueuse. Le choix des nanoparticules utilisées dépendra donc du type de substrat et de son comportement électrique en solution. Comme expliqué précédemment, ce choix dépendra des différentes interactions mises enjeu et dépendra notamment du point isoélectrique de la surface du substrat.

Les dispersions, encore appelées suspensions, de nanoparticules sont souvent désignées sous le terme de dispersions ou de suspensions colloïdales.

Par ailleurs, la nature du polymère utilisé dans le cadre de la présente invention a peu d'influence. Ainsi, tout type de polymère peut être utilisé pour recouvrir la surface d'un substrat selon la présente invention. Une fois déposé, le polymère pourra donc être cristallin ou amorphe.

Bien évidemment, la température de fusion du polymère utilisé devra être inférieure à la température de l'environnement dans lequel se trouve ledit polymère une fois déposé sur le substrat. De même, si le polymère se trouve dans un milieu liquide, ce dernier ne devra pas être un solvant dudit polymère pour éviter sa dissolution.

En particulier, le polymère pourra être choisi parmi des polymères thermoplastiques, tels que les polyméthacrylates, comme le polyméthacrylate de méthyle (PMMA) ou le polyméthacrylate d'éthyle (PEMA), l'oxyde de polyphénylène (PPO), le polysulfure de phénylène (PPS), le polypropylène ou le polychlorure de vinyle (PVC) ; des polymères thermodurcissables, tels que les résines époxy, les polycarbonates, les polyimides ou le polydicyclopentadiène (PDCPD) ; des élastomères, tels que les silicones comme le polydiméthylsiloxane (PDMS), les polyuréthanes, le polyisobutylène, le polychloroprène (PCP), le polybutadiène ou le polyisoprène (PI) ; des polymères naturels, tels que la cellulose, le latex ou l'amidon ; des polyesters, tels que le polyéthylène théréphtalate (PET) ; des polyélectrolytes cationiques, tels que la poly-L-lysine (PLL) ou la polyallylamine (PAH) ; des polyélectrolytes anioniques, tels que l'acide poly-L-glutamique (PGA) ou le sulfonate de polystyrène (PSS) ; des polycétones tels que des poly(aryl éther cétones) ; des polyamides tels que des polyaramides ; des polyacrylonitriles ; des polycyanoacrylates ; des polyéthersulfones ; le polystyrène (PS) ; le polytétrafluoroéthylène (PTFE) ; le polyéthylène ; le polyvinylpyrrolidone (PVP) ; l'acétate de polyvinyle (PVA ou PVAc) ; des polymères réticulés, branchés ou en étoile ; des copolymères ; et dendrimères.

Le polymère utilisé pourra être notamment un polymère ou copolymère fluoré tel que le polytétrafluoroéthylène (PTFE), le polymère d'éthylène-tetrafluoroéthylène (ETFE), le polychlorotrifluoroéthylène, le perfluoropropylène, le poly(acétate d'heptafluorobutyle), le copolymère de fluorure de vinylidène et de chlorotrifluoroéthylène, le copolymère de fluorure de vinylidène et de perfluoropropène, le poly(ester de 2,2,3,3,4,4-hexafluoropentanediol et de l'acide adipique), ou encore le 3,3,3-trifluoropropylméthylsilicone.

Le polymère utilisé pourra également être un mélange des différents polymères précités.

De manière préférentielle, le polymère pourra être choisi parmi des polymères thermoplastiques, tels que le polyméthacrylate de méthyle (PEMA) ou le polyméthacrylate d'éthyle (PMMA), des polyélectolytes cationiques, tels que la poly-L-lysine (PLL) ou la polyallylamine (PAH), et des polyélectolytes anioniques, tels que l'acide poly-L-glutamique (PGA) ou le sulfonate de polystyrène (PSS).

Selon un aspect particulier de l'invention, le polymère ne sera pas un polyélectrolyte tel que défini ci-dessus.

Par ailleurs, le procédé de l'invention permet de déposer des films de polymères d'épaisseur très variable et notamment des films très fins, mais sans fluctuations importantes de l'épaisseur du film de polymère sur l'ensemble de la surface du substrat.

En particulier, l'épaisseur du film de polymère pourra être comprise entre 20 nm et 100 $\mu$m, et de préférence entre 50 nm et 100 $\mu$m.

De même, la variation de l'épaisseur du film de polymère sur l'ensemble de la surface du substrat recouverte pourra être avantageusement inférieure à 10 nm, de préférence inférieure à 5 nm, et encore de préférence, inférieure à 1 nm.

L'épaisseur du film de polymère déposé est mesurée par interférométrie en lumière blanche (franges d'égal ordre chromatique). Les variations d'épaisseur locales éventuelles du film sur le substrat et sa topographie sont révélées ainsi facilement, puisque la résolution de la technique permet une mesure à 0,2 nm près.

Pour des substrats opaques optiquement et/ou pour des applications où la précision sur la mesure de l'épaisseur est moins cruciale, d'autres techniques pourront être envisagées (telles que profilométrie, imagerie AFM après rayure, ellipsométrie, microscopie électronique ou encore rayons X).

De plus, le film de polymère pourra comprendre également des particules métalliques ou polymériques de taille nanométrique, ou éventuellement de taille micrométrique. Il pourrait être envisagé également d'incorporer dans le film de polymère des nanoparticules, des pigments ou des nanotubes tels que définis précédemment.

Par « particules métalliques », on entend des particules solides de taille nanométrique, ou éventuellement de taille micrométrique, comprenant un métal tel que l'aluminium, l'argent, le cadmium, le cérium, le chrome, le cobalt, le cuivre, l'étain, le fer, le gallium, le manganèse, le nickel, l'or, le palladium, le platine, le plomb, le ruthénium, le sélénium, le soufre, le titane, le thorium, le tungstène, l'yttrium, le zinc, le zirconium, ainsi que leurs oxydes, leurs hydroxydes, leurs carbonates, et leurs mélanges et alliages.

Par « particules polymériques », on entend des particules solides de taille nanométrique, ou éventuellement de taille micrométrique, comprenant un ou plusieurs polymères, naturls ou synthétiques. On peut citer en particulier des particules de latex, éventuellement stabilisées par un copolymère dibloc. Dans ce cas, le copolymère permet d'éviter l'agrégation des nanoparticules entre elles dans le film de polymère, le copolymère étant constitué d'une partie (ou bloc) ayant une affinité plus grande pour les nanoparticules tandis que l'autre partie (ou bloc) aura une affinité plus importante pour le polymère du film.

Par « taille nanométrique », on entend que le diamètre moyen des particules est inférieur au micron. Ainsi, les nanoparticules auront avantageusement un diamètre de particules compris entre 1 nm et 1 $\mu$m, notamment entre 2 et 200 nm, de préférence entre 3 et 50 nm, et encore de préférence entre 3 et 20 nm.

Par « taille micrométrique », on entend que le diamètre moyen des particules est compris entre 1 $\mu$m et 50 $\mu$m, de préférence entre 1 $\mu$m et 10 $\mu$m.

De préférence, les particules incorporées dans le film de polymère auront une taille nanométrique.

L'incorporation de particules métalliques dans le film de polymère permet notamment d'introduire des particules conductrices, ou encore magnétiques, dans un film isolant permettant ainsi le tracé de lignes conductrices, ou magnétiques, micrométriques ou encore, le stockage optique.

De même, l'inclusion dans un film de polymère de particules polymériques telles que des particules de latex permet d'introduire des particules de nature plutôt molles dans un film dur ce qui favorise ainsi l'absorption de chocs.

Enfin, de manière générale, l'introduction de particules dans le film de polymère permet de modifier les propriétés mécaniques du film de polymère (rigidité, résistance à l'abrasion, aux rayures, à l'usure), ainsi que ses propriétés optiques (transparence, coloration, anti-reflet, stockage optique, absorption de radiations électromagnétiques pour rendre la surface protégée non visible dans des applications de non détection par radars par exemple), électriques (conducteurs, semi-conducteurs ou isolants), ou encore magnétiques.

Le dépôt du film de polymère pourra être réalisé par des méthodes classiques de dépôt de film de polymère bien connues de l'homme du métier, et ce, soit à partir du polymère sous une forme fondue, soit à partir d'une solution du polymère dans un solvant adapté que l'homme du métier pourra identifier facilement.

On peut citer notamment un dépôt par centrifugation (appelé classiquement « spin-coating »), un dépôt par trempage (appelé classiquement « dip-coating »), un dépôt par gouttes (appelé classiquement « casting »), un dépôt par écoulement en flux laminaire ou un dépôt par pulvérisation (appelé classiquement « aerospray »).

Dans un mode de réalisation particulier, le procédé de l'invention pourra comprendre, avant le dépôt du film de polymère, une étape supplémentaire de traitement de la surface du substrat à recouvrir afin d'améliorer l'adhérence du film de polymère sur le substrat, telle qu'un traitement par silanisation, par plasma froid ou par UV sous ozone.

Ces différentes techniques de traitement de surface permettent de greffer sur la surface du substrat un certain nombre de groupements chimiques tels qu'un groupement hydroxyle ou encore une chaîne comportant une fonction silane, ce qui facilitera ensuite l'adhésion du polymère sur le substrat.

Ainsi, en effectuant un prétraitement de la surface du substrat à recouvrir en plus de l'adsorption de nanoparticules sur cette surface, l'adhérence du film de polymère sur le substrat sera encore améliorée.

Dans un autre mode de réalisation particulier, le procédé de l'invention pourra comprendre une étape supplémentaire de traitement après dépôt du film de polymère, notamment un traitement thermique comme un recuit du film de polymère à une température supérieure à la température de transition vitreuse du polymère.

Cette étape de recuit permet notamment d'éliminer toute trace de solvant résiduel.

De manière avantageuse, ce procédé pourra être utilisé pour un traitement de surface anticorrosif et/ou antibactérien, et/ou pour la formation de multi-couches de polyélectrolytes et/ou pour le collage et plus particulièrement pour un traitement anticorrosif et/ou antibactérien et/ou pour un collage.

La présente invention concerne également un substrat revêtu d'un film de polymère susceptible d'être obtenu par le procédé de l'invention tel que décrit ci-dessus.

De manière avantageuse, le substrat de l'invention est caractérisé en ce que le film de polymère obtenu par ledit procédé de l'invention est homogène chimiquement et topographiquement.

De même, l'interface entre le substrat et le film de polymère obtenu par ledit procédé de l'invention est avantageusement essentiellement dépourvu de cavités, trous ou défauts microscopiques, permettant ainsi d'éviter le phénomène de délamination rencontré avec les procédés de l'art antérieur.

## DESCRIPTIF DES FIGURES ANNEXEES

Figures 1 : Les figures 1a et 1b représentent respectivement l'image des franges d'égal ordre chromatique (F.E.C.O.) obtenue par interférométrie en lumière blanche et l'image de la topographie du film de polymère obtenue par microscopie à force atomique (AFM) pour un film de polymère ayant été déposé sur un substrat ayant subi un prétraitement par silanisation en phase gazeuse (voir exemple 1).

Figures 2 : La figure 2a représente l'image des franges d'égal ordre chromatique (F.E.C.O.) obtenue par interférométrie en lumière blanche pour un substrat de l'invention et les figures 2b et 2c représentent les images obtenues par microscopie à force atomique (topographie ou phase, respectivement), pour le même substrat plongée dans l'eau (voir exemple 1).

Figure 3 : La figure 3 représente l'épaisseur du film de polymère obtenue en fonction de la concentration de PEMA dans le solvant, en présence ou en absence de nanoparticules d'oxyde de cérium adsorbées sur le substrat avant le dépôt du film de polymère (voir exemple 1).

Figures 4 : Les figures 4A1 et 4B1 représentent les images obtenues par microscopie à force atomique (topographie ou phase, respectivement) à partir d'un substrat revêtu d'un film de PPO, ledit substrat étant laissé dans l'air. Les figures 4A2 et 4B2 correspondent respectivement aux figures 4A1 et 4B1 mais dans le cas où le substrat était plongé dans l'eau (voir exemple 5).

Figures 5 : Les figures 5A1, 5B1, 5A2 et 5B2 correspondent respectivement aux figures 4A1, 4B1, 4A2 et 4B2 mais pour un substrat revêtu d'un film de PS (voir exemple 5).

Figures 6 : Les figures 6A et 6B correspondent respectivement aux figures 4A2 et 4B2 mais pour un substrat revêtu d'un film de PVP (voir exemple 5).

Figures 7 : Les figures 7A1, 7B1, 7A2 et 7B2 correspondent respectivement aux figures 4A1, 4B1, 4A2 et 4B2 mais pour un substrat revêtu d'un film de PI (voir exemple 5).

Figures 8 : Les figures 8A1, 8B1, 8A2 et 8B2 correspondent respectivement aux figures 4A1, 4B1, 4A2 et 4B2 mais pour un substrat revêtu d'un film de PVC (voir exemple 5).

Figures 9 : Les figures 9A1, 9B1, 9A2 et 9B2 correspondent respectivement aux figures 4A1, 4B1, 4A2 et 4B2 mais pour un substrat revêtu d'un film de PVAc (voir exemple 5).

Figures 10 : Les figures 10A et 10B correspondent respectivement aux figures 4A2 et 4B2 mais pour le substrat en acier de l'exemple 6.

## EXEMPLES

Les exemples donnés ci-dessous permettent d'illustrer l'invention et en aucun cas de la limiter à ces seuls exemples.

## EXEMPLE 1

*Substrat :* hémicylindre de rayon de courbure d'environ 2 cm de mica muscovite (aluminosilicate).
*Polymère :* polyméthacrylate d'éthyle (PEMA).
*Nanoparticules :* oxyde de cérium.

Le substrat a été choisi pour la difficulté à le recouvrir par un film de polymère qui soit stable en milieu liquide puisque ce substrat présente les caractéristiques suivantes :

- chimiquement inerte, ce qui rend l'accrochage de macromolécules de polymère impossible par des méthodes classiques telles qu'un simple dépôt du polymère précédé éventuellement d'un traitement par plasma et/ou silanisation ;
- fortement hydrophile, ce qui lui confère une incompatibilité avec des polymères hydrophobes, et favorise le démouillage et la délamination ;
- non rugueux au niveau atomique, ce qui rend plus difficile l'accrochage d'un film de polymère et favorise la formation de cavités ; et
- en géométrie courbée, ce qui rend difficile le fait d'épouser parfaitement la convexité ou concavité du substrat pour le film.

## 1. Dépôt du film de polymère

Afin de mettre en évidence l'intérêt de déposer au préalable des nanoparticules sur la surface du substrat, le film de polymère a été déposé :

(1) directement sur le substrat, ou

(2) sur le substrat après traitement de la surface par silanisation (technique utilisée classiquement pour améliorer l'accrochage d'un film de polymère par greffage de groupements chimiques sur la surface du substrat), ou

(3) sur le substrat après adsorption de nanoparticules sur sa surface (procédé de l'invention).

Dans chacun de ces cas, le film de polymère a été déposé par centrifugation, technique plus connue sous le terme « spin-coating ».

Cette technique consiste à déposer une goutte de solution de polymère dans un solvant au centre du substrat qui est maintenu par aspiration (vide) sur la plaque d'un spin-coater. Une accélération forte et instantanée est alors appliquée à ce système (par rotation à grande vitesse) qui écrase la goutte et la répartit sur la surface du substrat. Le film est ensuite laissé sécher en évaporant le solvant à une vitesse de rotation constante.

Le dépôt de ces films a été réalisé par un spin-coater Gyrset RC 05 (Süss Microtech) situé sous une hotte à flux laminaire horizontal placée dans une salle blanche, pour éviter au maximum la contamination des surfaces par des débris et des poussières.

Ces précautions de propreté n'ont été appliquées qu'en raison des techniques expérimentales employées pour caractériser les films de polymère qui exigent de grandes conditions de propreté mais des conditions moins contraignantes pourraient être employées selon l'utilisation future envisagée du substrat recouvert par le film de polymère.

Les paramètres qui ont été utilisés pour le spin-coater sont les suivants :

- accélération de 2500 tours.min$^{-1}$.s$^{-1}$, et
- vitesse de rotation de 2500 tours.min$^{-1}$ pendant 60s.

Le solvant utilisé pour mettre le polymère en solution est le toluène.

Un recuit du film obtenu après le « spin-coating » a été réalisé à 73°C, puisque la température de transition vitreuse du PEMA est de 63°C, pendant une durée de 25 minutes dans une étuve sous vide dynamique préchauffée. Ce recuit permet d'éliminer les éventuelles traces de solvant résiduelles mais il n'est pas indispensable.

L'épaisseur du film de polymère ainsi obtenu augmente linéairement avec la concentration en PEMA (jusqu'à 30g.L$^{-1}$, concentration maximale étudiée dans cette application).

## 2. Traitement de la surface du substrat par silanisation

Dans le cas (2), la surface du substrat a été prétraitée par silanisation en phase gazeuse avant le dépôt du film de polymère.

Cette technique permet de greffer des groupements chimiques (groupements silanes) sur la surface du substrat qui vont faire office d'agents de couplage pour augmenter l'adhésion du film sur le substrat.

Ainsi, le substrat de mica, fraîchement clivé, est placé dans l'enceinte d'un réacteur plasma à eau afin d'activer la surface en créant des liaisons OH à la surface du mica. Le plasma est réalisé pendant 200 s à une puissance de 15 W et à une pression de 8 000 Pa. Le substrat de mica est ensuite placé dans une cloche sous vide et transféré dans une boîte à gants sous atmosphère d'argon pour réaliser la silanisation en phase gazeuse durant 12 heures en utilisant le (3-(aminopropyl) triéthoxysilane). Le substrat de mica est à nouveau transféré dans une cloche pour éviter le contact avec l'oxygène et le dépôt du film de polymère est réalisé comme décrit précédemment.

## 3. Traitement de la surface du substrat par adsorption de nanoparticules

Dans le cas (3), des nanoparticules d'oxyde de cérium sont adsorbées sur la surface du substrat, selon l'invention.

Ainsi, de l'oxyde de cérium, sous forme de poudre et de formule chimique $CeO_2(HNO_3)_{0,5}(H_20)_4$, est dissout à une concentration de 20 g.L$^{-1}$ (fraction volumique 0,003) dans de l'eau déionisée. Cela permet d'obtenir une solution colloïdale stable de pH égal à 2 de nanoparticules d'oxyde de cérium (Spalla, O. et coll., J. of colloid and interface science 1997, 192, 43-65). Ces nanoparticules sont chargées positivement et ont un diamètre moyen de 5 nm.

Le mica muscovite, quant à lui, est chargé négativement en solution aqueuse.

La surface de mica à recouvrir, fraîchement clivée, est donc immergée pendant 3 minutes dans cette solution de nanoparticules d'oxyde de cérium, ce qui permet l'adsorption irréversible de nanoparticules sur la surface du substrat par interactions électrostatiques. Au bout des 3 minutes, la surface de mica est rincée, puis laissée sécher. La surface du substrat recouverte par des nanoparticules est alors de l'ordre de 30%.

Une fois les nanoparticules adsorbées irréversiblement et la surface du substrat séchée, le film de polymère est déposé selon la méthode décrite précédemment.

**4. Tests de stabilité en milieu liquide**

**Cas (1)**

Lorsque le substrat (1), recouvert directement par un film de PEMA, est immergé dans de l'eau, le film de PEMA se détache immédiatement et totalement du substrat de mica. Ce phénomène est indépendant de l'épaisseur des films déposés (200 nm à quelques microns).

Le même résultat est observé lorsque le dépôt du film de polymère est réalisé par « casting », c'est-à-dire par dépôt d'une goutte de solution de polymère sur le mica puis séchage à l'air libre ou sous atmosphère contrôlée de solvant.

Le problème d'adhérence du film sur le substrat rencontré dans le cas présent n'est donc pas dû à la technique utilisée pour le dépôt du film de polymère.

**Cas (2)**

Dans le cas d'un prétraitement de la surface du mica à recouvrir par silanisation, le film de PEMA déposé sur le substrat (2) ne montre pas de détachement visible lorsque le substrat est immergé dans l'eau.

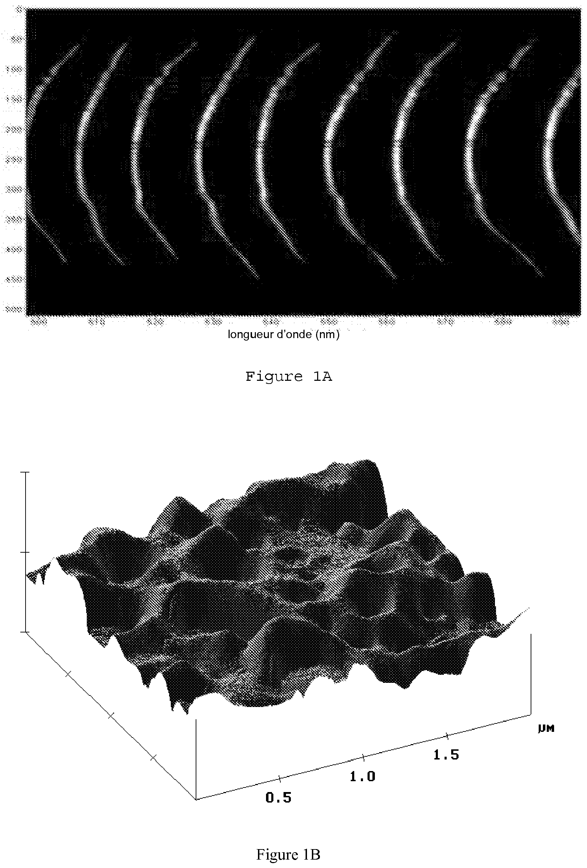

Cependant, des contrôles du film ont été réalisés en topographie par interférométrie en lumière blanche (Surface Force Apparatus, SFA) et en imagerie à force atomique (AFM). Les résultats sont présentés respectivement sur les figures 1a et 1b.

L'image des franges d'égal ordre chromatique (F.E.C.O.) obtenue par interférométrie en lumière blanche montre la présence de modulations le long des franges d'interférence (figure 1a). Ceci révèle la présence de cavités de taille microscopique (de l'ordre ou inférieure au micromètre) à l'interface mica / film de PEMA dans lesquelles la solution aqueuse s'est infiltrée, créant ainsi des vagues sur le film.

De même, les « vagues » observées sur la figure 1b révèlent la présence de cavités à l'interface mica / PEMA dans lesquelles de l'eau s'est infiltrée.

La présence de ces cavités microscopiques favorisera alors la délamination du film de polymère.

Les mêmes résultats ont été obtenus lorsque la silanisation a été réalisée en phase liquide (éthanol) à l'aide du même composé silane.

Ceci montre donc que le nombre de points d'ancrage formés par silanisation, c'est-à-dire la densité de groupements silanes à la surface du substrat, est insuffisant pour permettre un bon ancrage et donc une bonne tenue du film de polymère sur le substrat.

**Cas (3)**

Lorsque le substrat (3) est immergé dans de l'eau, le film de PEMA reste parfaitement ancré sur le substrat et reste stable en solution aqueuse pendant au moins plusieurs semaines.

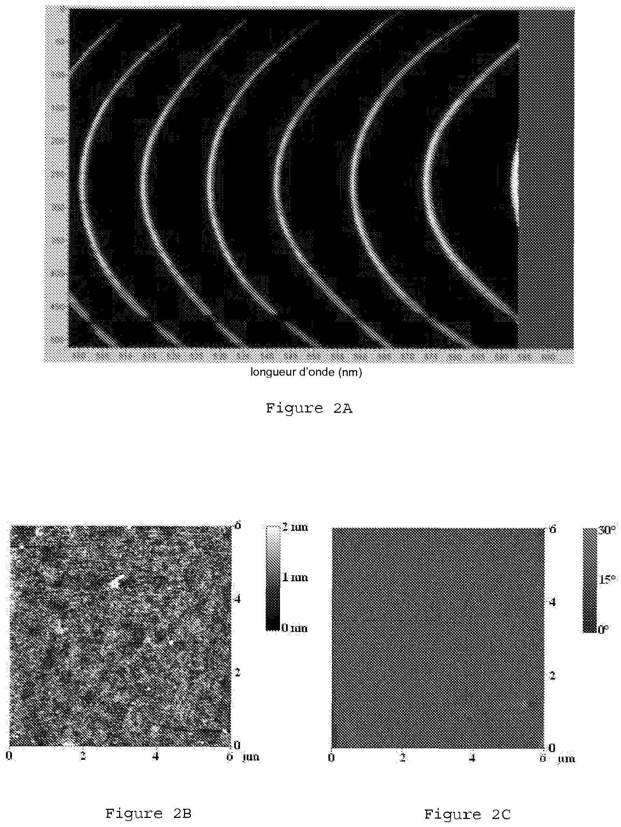

Les F.E.C.O. obtenues par interférométrie en lumière blanche (voir figure 2a) sont parfaitement lisses, uniformes et sans fluctuations d'épaisseur et ne présentent plus de vagues, contrairement à celles obtenues pour le substrat (2) ayant subi une silanisation avant le dépôt du film de polymère. Ceci montre donc l'absence de formation de cavités microscopiques entre le substrat et le film de polymère et l'absence de défauts ou de trous du film de polymère.

Les images obtenues par microscopie à force atomique (AFM) sont présentées sur les figures 2b et 2c (fig. 2b : topographie, fig. 2c : phase).

La rugosité moyenne du film de PEMA est ainsi de l'ordre de 0,5 nm sur une zone de 400 $\mu m^2$ (figure 2b). L'image obtenue en phase indique, de plus, que le film de polymère est parfaitement homogène sur toute la surface.

Les mêmes résultats ont été obtenus après immersion du substrat pendant des durées supérieures à 10 jours dans de l'eau déionisée, salée, ou en présence de tensioactifs, ces différentes conditions favorisant la délamination du film de polymère.

Ainsi, l'adsorption de nanoparticules sur le substrat semble permettre au film de polymère de s'accrocher entre les nanoparticules, ce qui permet une tenue parfaite du film sur le substrat, même après de longues périodes d'immersion du substrat en solution aqueuse.

Il convient de noter également que la présence des nanoparticules n'a pas d'effet sur la rugosité du film de PEMA, celle-ci étant de l'ordre de 0,5 nm sur une zone de 400 ($\mu m^2$ d'aire.

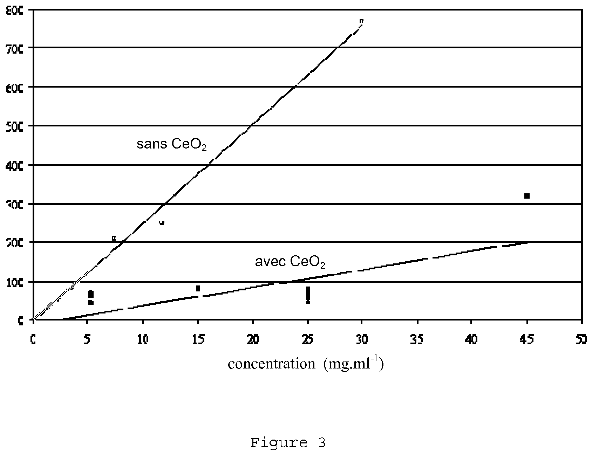

Comme déjà évoqué précédemment, l'épaisseur du film augmente linéairement avec la concentration de PEMA. Cependant, l'épaisseur finale du film de polymère obtenu est bien plus faible en présence de nanoparticules adsorbées sur le substrat qu'en leur absence (figure 3).

Ceci peut s'expliquer par le fait que seul le polymère situé à proximité des nanoparticules est accroché, le reste étant éjecté lors du « spin-coating ». C'est d'ailleurs ce qui explique pourquoi il y a une meilleure adhésion, toutes les chaînes à proximité du substrat offrant des points d'ancrage. Les films obtenus sont donc plus fins qu'ils ne le seraient en l'absence de ces points d'ancrage.

De manière remarquable, des films très minces (d'une épaisseur de l'ordre de quelques rayons de giration), stables en environnement liquide, peuvent être obtenus. Par exemple, avec une concentration de 25 mg.mL$^{-1}$, un film de 67 nm d'épaisseur peut être obtenu. Un film de 23 nm d'épaisseur à également pu être déposé.

De plus, la faible hystérèse entre les angles de contact d'avancée (76$\pm$1°) et de retrait (63$\pm$1°) de l'eau sur les surfaces de PEMA témoigne d'une grande homogénéité macroscopique de la surface, tant topographiquement, que chimiquement.

## EXEMPLE 2

*Substrat :* verre
*Polymère :* PEMA ou PMMA (polyméthacrylate de méthyle) ou PS (polystyrène)
*Nanoparticules :* oxyde de cérium

Le dépôt selon l'invention d'un film de polymère de PEMA, de PMMA ou de PS, sur du verre comme substrat a été réalisé dans les mêmes conditions que pour l'exemple 1 après adsorption de nanoparticules d'oxyde de cérium sur le substrat.

Ce dépôt a également été réalisé par dip-coating, c'est-à-dire par trempage du substrat dans une solution du polymère dans du toluène.

Les mêmes tests de stabilité de ces films de polymère après immersion dans une solution aqueuse ont été réalisés et ont montré la parfaite tenue des films de polymère sur le verre.

## EXEMPLE 3

*Substrat :* or
*Polymère :* PEMA ou PMMA ou PS
*Nanoparticules :* oxyde de cérium

Le dépôt selon l'invention d'un film de polymère de PEMA, de PMMA ou de PS, sur de l'or comme substrat a été réalisé dans les mêmes conditions que pour l'exemple 1 après adsorption de nanoparticules d'oxyde de cérium sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue des films de polymère sur l'or.

## EXEMPLE 4

*Substrat :* silicium
*Polymère :* PEMA ou PMMA ou PS
*Nanoparticules :* oxyde de cérium

Le dépôt selon l'invention d'un film de polymère de PEMA, de PMMA ou de PS, sur du silicium comme substrat a été réalisé dans les mêmes conditions que pour l'exemple 1 après adsorption de nanoparticules d'oxyde de cérium sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue des films de polymère sur le silicium.

## EXEMPLE 5

*Substrat :* mica muscovite

*Polymère :* Oxyde de polyphénylène (PPO) ou Polystyrène (PS) ou Polyvinylpyrrolidone (PVP) ou Polyisoprène (PI) ou Polychlorure de vinyle (PVC) ou Acétate de polyvinyle (PVAc)

*Nanoparticules :* oxyde de cérium

Le dépôt selon l'invention d'un film de polymère de PPO, de PS, de PVP, de PI, de PVC ou de PVAc, sur du mica comme substrat a été réalisé dans les mêmes conditions que pour l'exemple 1 après adsorption de nanoparticules d'oxyde de cérium sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur le mica.

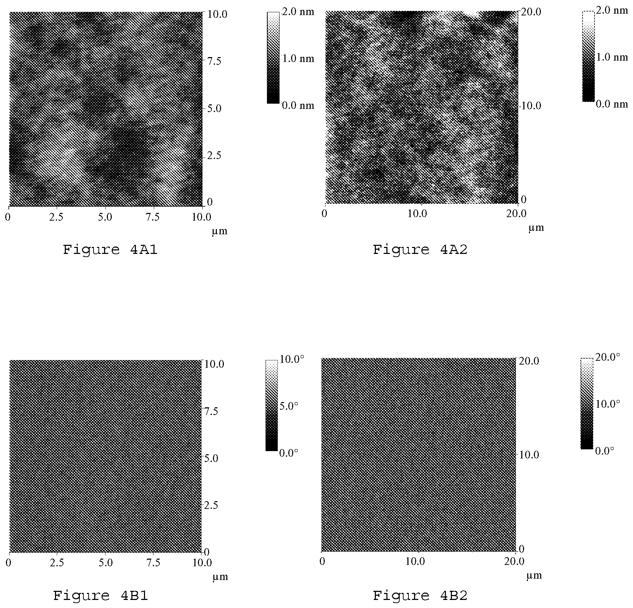

Les résultats obtenus sont présentés sur les figures 4 (PPO), 5 (PS), 6 (PVP), 7 (PI), 8 (PVC) et 9 (PVAc).

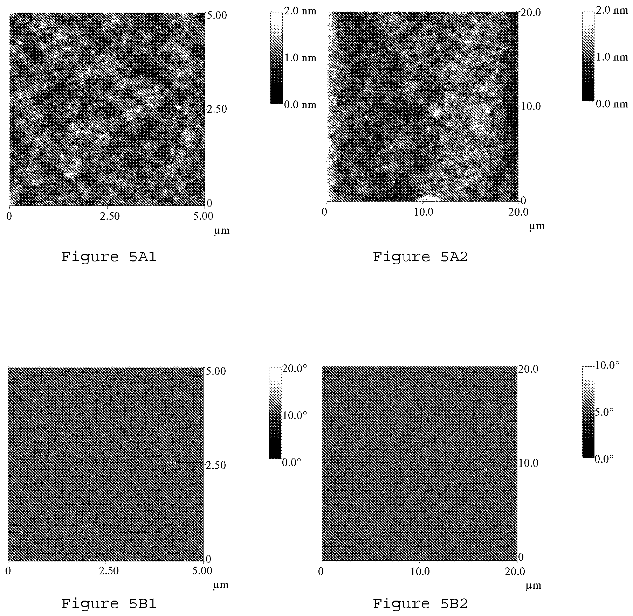

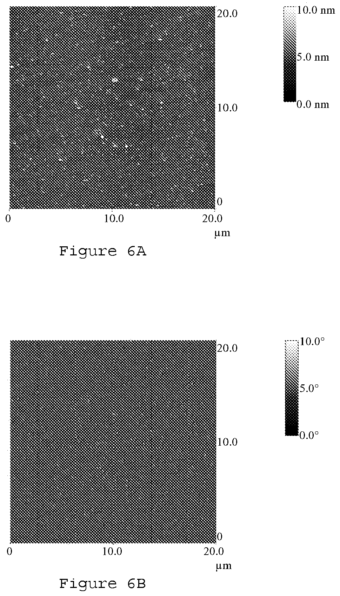

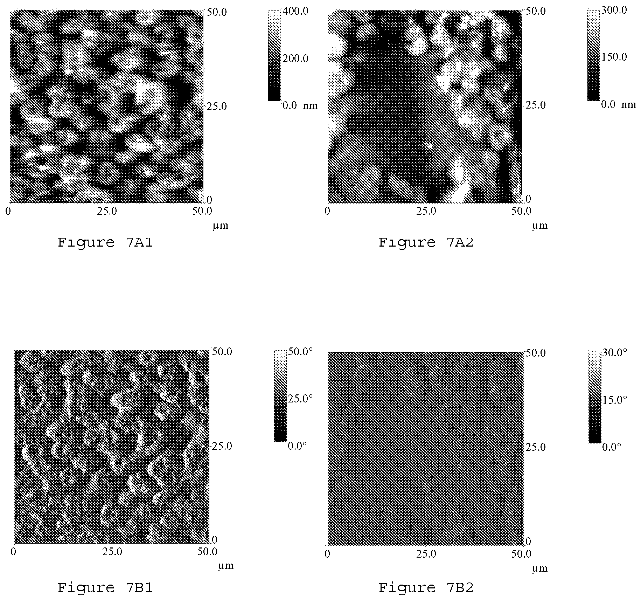

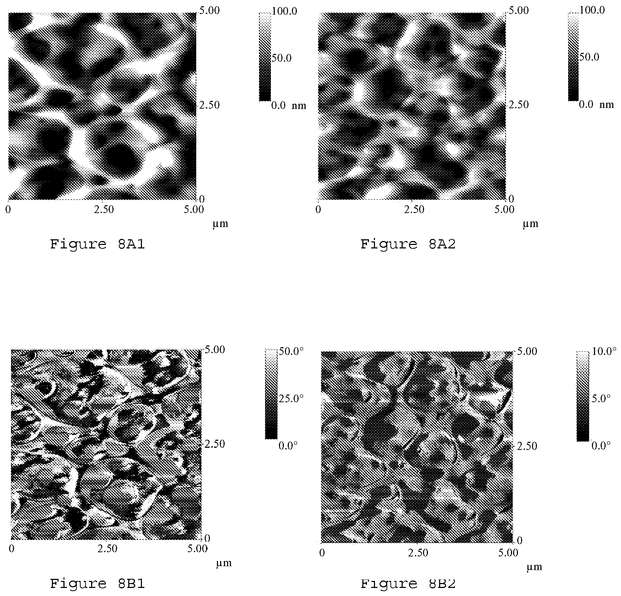

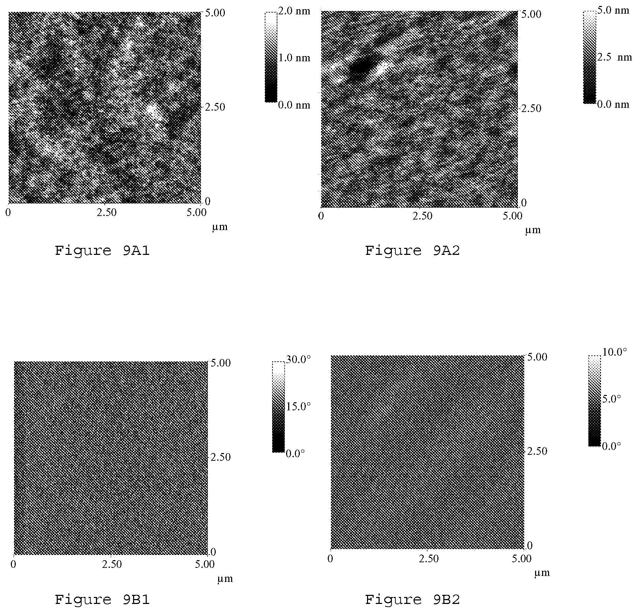

La rugosité moyenne a également été calculée à partir des images topographiques illustrées sur les figures 4 à 9 et les résultats suivants ont été obtenus :

| Polymère recouvrant le substrat | Rugosité moyenne | |
|---|---|---|
| | mesurée dans l'air | mesurée dans l'eau |
| PPO | 0,22 nm | 0,26 nm |
| PS | 0,36 nm | 0,33 nm |
| PVP | 0,24 nm | 0,74 nm |
| PI | 86,2 nm | 69,6 nm |
| PVC | 38,2 nm | 27,1 nm |
| PVAc | 0,29 nm | 0,78 nm |

**EXEMPLE 6**

*Substrat :* acier inoxydable

*Polymère :* Poly (méthacrylate d'éthyle) (PEMA)

*Nanoparticules :* oxyde de cérium

Le dépôt selon l'invention d'un film de polymère de PEMA, sur de l'acier inoxydable comme substrat a été réalisé dans les mêmes conditions que pour l'exemple 1 après adsorption de nanoparticules d'oxyde de cérium sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur l'acier inoxydable.

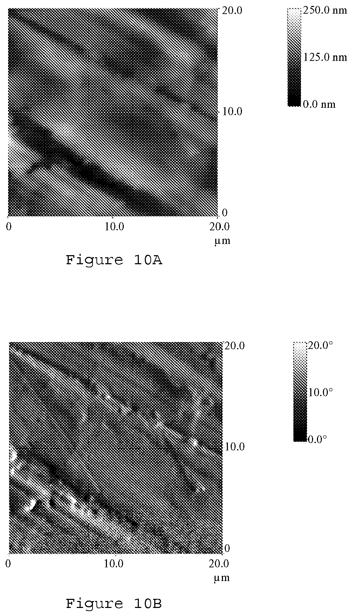

Ainsi, on constate que la rugosité élevée de la surface de l'acier n'est pas un obstacle à la tenue du film de polymère sur le substrat. En effet, des zones comportant des arêtes sommitales de plus d'un micromètre en élévation sont recouvertes par le film polymère selon l'invention et ne sont pas sujettes au phénomène de délamination du film lors de l'immersion du substrat en milieu aqueux. Les images (figure 10A : topographie, figure 10B : phase) obtenues par AFM en mode tapping en liquide mettent en évidence que le substrat est recouvert de manière homogène par le film de polymère, ce dernier restant stable pour des durées d'au moins plusieurs semaines lors de l'immersion en milieu aqueux. L'analyse de rugosité à partir de l'image de topographie (figure 10A) montre une rugosité pic à pic de 264nm et une rugosité moyenne de 30nm sur la zone étudiée ($20 \times 20 \mu m^2$).

**EXEMPLE 7**

*Substrat :* laiton

*Polymère :* Poly (méthacrylate d'éthyle) (PEMA)

*Nanoparticules :* silice

Le dépôt selon l'invention d'un film de polymère de PEMA, sur du laiton comme substrat a été réalisé dans les mêmes conditions que pour l'exemple 1 après adsorption de nanoparticules de silice pyrogénique de 40 nm de diamètre (silice disponible commercialement) sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur le laiton.

**EXEMPLE 8**

> *Substrat :* cuivre
> *Polymère :* Poly (méthacrylate d'éthyle) (PEMA)
> *Nanoparticules :* silice

Le dépôt selon l'invention d'un film de polymère de PEMA, sur du cuivre comme substrat a été réalisé dans les mêmes conditions que pour l'exemple 1 après adsorption de nanoparticules de silice pyrogénique de 40 nm de diamètre sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur le cuivre.

**EXEMPLE 9**

> *Substrat :* aluminium
> *Polymère :* Poly (méthacrylate d'éthyle) (PEMA)
> *Nanoparticules :* silice

Le dépôt selon l'invention d'un film de polymère de PEMA, sur du l'aluminium comme substrat a été réalisé dans les mêmes conditions que pour l'exemple 1 après adsorption de nanoparticules de silice pyrogénique de 40 nm de diamètre sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur l'aluminium.

**EXEMPLE 10**

> *Substrat :* verre, acier
> *Polymère :* Poly (méthacrylate d'éthyle) (PEMA)
> *Nanoparticules :* oxyde de cérium
> *Conditions :* application d'un cisaillement sur le substrat immergé dans l'eau

Le dépôt selon l'invention d'un film de polymère de PEMA, sur du verre ou de l'acier comme substrat a été réalisé dans les mêmes conditions que pour l'exemple 1 après adsorption de nanoparticules d'oxyde de cérium sur le substrat.

Ce dépôt a également été réalisé par dip-coating, comme dans l'exemple 2.

La stabilité du recouvrement du substrat par un film de polymère a été vérifiée en présence de fluide en écoulement. Cette propriété est très importante pour toutes les applications industrielles où le substrat recouvert est non seulement en présence d'environnement liquide (situation "statique" où essentiellement les phénomènes de transport sont diffusifs) mais aussi lorsque le fluide est en mouvement (régime d'écoulement) où les phénomènes de convection, de turbulence deviennent prépondérants et créent des forces de surface et des contraintes de cisaillement importantes à l'interface du substrat avec le milieu liquide.

Le but de cette expérience est de tester la tenue du film de polymère préparé selon l'invention sur le substrat immergé en solution aqueuse lorsqu'une contrainte - un cisaillement - est appliquée sur le substrat. Les valeurs de contrainte appliquée ont été mises en rapport avec ce qui peut se trouver industriellement. Si l'on considère, par exemple, un écoulement dans un tuyau, dont les parois internes peuvent être recouvertes de film polymère selon l'invention, la contrainte visqueuse s'exerçant sur les parois est :

$$\sigma = \eta \, \dot{\gamma}$$

avec $\sigma$ : contrainte visqueuse ;
$\eta$ : viscosité du liquide (ici l'eau $10^{-3}$ kg/m.s) ;
$\gamma$ : taux de cisaillement, qui peut être estimé à v/d où v désigne la vitesse moyenne du fluide dans le tuyau et d le diamètre du tube.

Ainsi, pour un fluide aqueux s'écoulant à 10m/s, la contrainte visqueuse est de l'ordre de :

$\sigma$ = 0,1 Pa pour un tuyau de diamètre 10 cm, et
$\sigma$ = 0,01 Pa pour un tuyau de diamètre 1 m.

En réalité la formule précédente ne peut s'appliquer aussi directement pour des écoulements dans des tuyaux de grand diamètre, puisque même si les effets inertiels dominent globalement, par contre au niveau de la paroi du tube, les effets visqueux deviennent prépondérants dans une couche limite d'épaisseur de l'ordre : $\delta \approx \left( \dfrac{\eta d}{\rho v} \right)^{1/2}$ où $\rho$ désigne la masse volumique du fluide, et donc la longueur caractéristique qui intervient dans l'expression du taux de cisaillement, n'est plus le diamètre du tube, mais l'épaisseur de la couche limite : $\dot{\gamma} = \dfrac{v}{\delta}$

Ainsi pour un fluide aqueux s'écoulant à 10m/s, la contrainte visqueuse est de l'ordre de :

$\sigma$ = 30 Pa pour un tuyau de diamètre 1 m

La technique expérimentale employée permet de simuler une telle contrainte visqueuse appliquée au niveau de l'interface du film recouvrant le substrat. Un film aqueux est ainsi confiné entre une plaque de verre recouverte de PEMA selon l'invention (mêmes conditions que pour l'exemple 1 après adsorption de nanoparticules d'oxyde de cérium sur le substrat) et une autre surface animée parallèlement d'un mouvement sinusoïdal grâce à un cristal piézoélectrique oscillant dont l'amplitude et la fréquence peuvent être variées. Le confinement du film d'eau est contrôlé par interférométrie dans une géométrie sphère - plan sous microscope, où la surface oscillante confinante est une lentille de verre de diamètre 25 mm reliée au cristal piézoélectrique oscillant. Les anneaux de Newton observés en vue de dessus permettent de calculer l'épaisseur du film liquide confiné. Le confinement a été augmenté progressivement afin d'appliquer une contrainte visqueuse de plus en plus importante à l'interface du film de polymère et de la solution aqueuse. Il est à noter que le grand rayon de courbure de la lentille sphérique (50 mm) est au moins 1000 fois plus importante que l'épaisseur du confinement utilisé (quelques micromètres à 50 $\mu$m), si bien que l'écoulement local du fluide est équivalent à celui entre deux surfaces planes.

La stabilité du film de polymère recouvrant le substrat est suivie par microscopie au cours de l'expérience sous contrainte de cisaillement, et vérifiée après par les techniques déjà précitées (cf. la description générale et les autres exemples détaillés).

Des cisaillements ont été appliqués jusqu'à une fréquence de 8 Hz avec des amplitudes d'oscillation latérale allant de 50 jusqu'à 1000 $\mu$m. Avec une contrainte sinusoïdale de déplacement selon $x$ = a sin $\omega t$ où a est l'amplitude (a $\sim$ 1000 $\mu$m par exemple) et $\omega$ la pulsation, et de vitesse instantanée $v$ = a$\omega$cos$\omega t$, le taux de cisaillement à l'interface polymère/eau est de l'ordre de $\dot{\gamma} = \dfrac{a}{d}\omega$ , ce qui donne une contrainte visqueuse $\sigma$ de l'ordre de 3 Pa pour une séparation entre les surfaces de 17 $\mu$m et de 30 Pa pour un confinement 10 fois supérieur, soit le même ordre de grandeur de la contrainte visqueuse exercée sur les parois lors d'un écoulement rapide dans des tuyaux de taille industrielle décrits ci-dessus. Notre procédé montre que le substrat recouvert par le film de polymère reste inaltéré (aucun défaut n'apparaît sur le film, aucun délaminage ou décollement du revêtement n'est noté) et reste ainsi stable même pour des cisaillements prolongés (heures).

La même expérience a été réalisée pour le même revêtement de polymère sur un substrat en acier inoxydable.

La mesure de la séparation entre le substrat et la surface confinante oscillante est moins précise, du fait de l'opacité optique du substrat en acier, mais a été estimée à partir des positionnements de l'expérience avec un substrat de verre recouvert du même film de polymère. Comme pour celui-ci la stabilité du revêtement sous contrainte de cisaillement a été observée.

Les mêmes expériences ont été réalisées également en présence de glycérol (viscosité 1,49 Pa.s à 20°C) afin d'augmenter les contraintes visqueuses exercées sur le film polymère de deux ou trois ordres de grandeur. Les résultats montrent que le substrat recouvert par le film polymère reste parfaitement recouvert sans délamination, décollement du revêtement, ou induction de défauts au niveau microscopique, et reste stable même pour des cisaillements prolongés (plusieurs heures).

Ces résultats permettent de montrer que les films de polymère déposés sur un substrat selon le procédé de l'invention peuvent rester stables même dans un environnement fluide en mouvement et non statique, ces expériences ayant été réalisées dans des conditions relativement drastiques pour le film de polymère puisqu'il est à noter qu'une contrainte de cisaillement oscillante est bien plus drastique que des contraintes visqueuses subies par une paroi lors d'un écoulement de fluide dans un tuyau.

## EXEMPLE 11

*Substrat :* acier inoxydable
*Polymère :* Poly (méthacrylate d'éthyle) (PEMA)
*Nanoparticules :* $\alpha$-alumine (diamètre : 100-300nm), solution aqueuse à 40g/l

Le dépôt selon l'invention d'un film de polymère de PEMA, sur de l'acier inoxydable comme substrat a été réalisé dans les mêmes conditions que pour l'exemple 1 après adsorption de nanoparticules d'$\alpha$-alumine (disponible commercialement) sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur l'acier inoxydable.

De même, ce substrat recouvert a été testé sous contrainte de cisaillement selon les mêmes paramètres que ceux présentés dans l'exemple 10 permettant de montrer la parfaite tenue du film de polymère dans ces conditions.

## EXEMPLE 12

*Substrat :* mica muscovite
*Polymère :* Poly (méthacrylate d'éthyle) (PEMA)
*Nanoparticules :* oxyde de cérium (pulvérisées sur le substrat)

Le dépôt selon l'invention d'un film de polymère de PEMA, sur du mica muscovite comme substrat a été réalisé dans les mêmes conditions que pour l'exemple 1 après adsorption de nanoparticules d'oxyde de cérium sur le substrat, celles-ci étant pulvérisées sur le substrat par un aérographe et non pas déposées par immersion dans la solution.

Les conditions de dépôt des nanoparticules sont les suivantes : substrat vertical, pulvérisateur placé à 20cm environ du substrat, pression de l'ordre de 4bars (air comprimé) à travers une solution d'oxyde de cérium à 20g/l dans l'eau, temps d'exposition de 30s. Dans cet exemple, une buse de $400\mu m$ de diamètre a été employée mais son ouverture n'est pas un paramètre déterminant pour le procédé. Le substrat une fois pulvérisé est laissé à sécher à l'air ambiant sans rinçage préalable.

Le polymère est ensuite déposé selon la méthode habituelle. Ce dernier dépôt peut également être réalisé par dip-coating, comme dans l'exemple 2, ou par pulvérisation d'une solution de polymère.

Les mêmes tests de stabilité de ces films de polymère après immersion dans une solution aqueuse ont été réalisés et ont montré la parfaite tenue du film de polymère sur le mica muscovite.

L'avantage de la pulvérisation de la solution de nanoparticules réside dans la possibilité d'enduire aisément des substrats de grandes dimensions et de formes complexes.

## EXEMPLE 13

*Substrat :* céramique

*Polymère :* Poly (méthacrylate d'éthyle) (PEMA)

*Nanoparticules :* $\alpha$-alumine (diamètre : 100-300nm), solution aqueuse à 40g/l.

Le dépôt selon l'invention d'un film de polymère de PEMA, sur de la céramique comme substrat poreux a été réalisé dans les mêmes conditions que pour l'exemple 1 après adsorption de nanoparticules d'$\alpha$-alumine sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur la céramique, montrant la validité de l'invention sur des substrats poreux.

**EXEMPLE 14**

| *Substrat :* | Poly (chlorure de vinyle) (PVC) |
| | Polytétrafluoroéthylène (PTFE) |
| | Polydiméthylsiloxane (PDMS) |
| | Polycarbonate (PC) |
| | Résine Epoxy |
| *Polymère :* | Poly (méthacrylate d'éthyle) (PEMA) |
| *Nanoparticules :* | oxyde de cérium |

Le dépôt selon l'invention d'un film de polymère de PEMA, sur du PVC, du PTFE, du PDMS, du PC et de la résine époxy comme substrats polymères a été réalisé dans les mêmes conditions que pour l'exemple 1 après adsorption de nanoparticules d'oxyde de cérium sur les substrats.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur le PEMA, le PVC, le PTFE, le PDMS, le PC et la résine époxy, montrant la validité de l'invention sur des substrats polymères.

**EXEMPLE 15**

| *Substrat :* | Aluminium |
| | Cuivre |
| | Zinc |
| | Laiton |
| *Polymère :* | Poly (méthacrylate d'éthyle) (PEMA) |
| *Nanoparticules :* | $\alpha$-alumine (diamètre : 100-300nm), solution aqueuse à 40g/l |

Le dépôt selon l'invention d'un film de polymère de PEMA, sur de l'aluminium, du cuivre, du zinc et du laiton comme substrats métalliques a été réalisé dans les mêmes conditions que pour l'exemple 1 après adsorption de nano-particules d'$\alpha$-alumine sur le substrat.

Ce dépôt a également été réalisé par dip-coating, comme dans l'exemple 2.

Les mêmes tests de stabilité de ces films de polymère après immersion dans une solution aqueuse ont été réalisés et ont montré la parfaite tenue du film de polymère sur l'aluminium, le cuivre, le zinc et le laiton, montrant la validité de l'invention sur des substrats métalliques.

Cet exemple, à mettre en regard avec les exemples 7, 8 et 9, montre la possibilité de varier le type de nanoparticules employées pour assurer la tenue du film de polymère sur ces substrats selon leur nature physico-chimique.

**Revendications**

**1.** Procédé de recouvrement d'un substrat, dont au moins une dimension est supérieure au millimètre, par un film de polymère **caractérisé en ce que**, préalablement au dépôt dudit film de polymère, des nanoparticules sont adsorbées de manière électrostatique sur la surface dudit substrat à recouvrir.

2. Procédé selon la revendication 1, **caractérisé en ce que** le substrat comprend une surface à recouvrir métallique comprenant notamment de l'acier, de l'acier inoxydable, un métal tels que l'aluminium, l'or, l'argent, le fer, le plomb, le cuivre, le zinc, le nickel, le titane, le tungstène, le chrome, le platine, le cobalt, le zirconium, le molybdène, l'étain, le gallium, le ruthénium, l'yttrium et le manganèse, un alliage tel que le laiton ou le bronze, ou un mélange de ceux-ci ; et/ou minérale comprenant notamment de la pouzzolane, des argiles, du sable, des graviers, de la perlite, de la vermiculite, des laines minérales, du graphite ou un aluminosilicate tel que le mica, du silicium, du verre, un oxyde métallique tel que le saphir, ou un mélange de ceux-ci ; et/ou polymérique comprenant notamment du polytétrafluoroéthylène, du polydiméthylsiloxane, du polycarbonate, de la résine époxy ou du poly(chlorure de vinyle) ; et/ou organométallique ; et/ou organique comme de la cellulose, du bois et ses dérivés comme des fibres ou de l'écorce, et des coques de fruits et écorces telles qu'une coque de noix de coco ; et/ou en céramique.

3. Procédé selon l'une quelconque des revendications 1 et 2, **caractérisé en ce que** la surface à recouvrir du substrat consiste en un domaine unique de la surface du substrat éventuellement ajouré ou en un ensemble de plusieurs domaines disjoints entre eux.

4. Procédé selon l'une quelconque des revendications 1 à 3, **caractérisé en ce que** le substrat est un instrument optique, tel qu'un miroir, une lentille ou un atténuateur ; un senseur, tel qu'un biosenseur ou un transistor organique à effet de champ ; un tuyau, notamment métallique ; ou une plaque ou un cylindre, notamment pour impression.

5. Procédé selon l'une quelconque des revendications 1 à 4, **caractérisé en ce que** la taille moyenne des nanoparticules est comprise entre 1 et 200 nm, avantageusement entre 2 et 200 nm, de préférence entre 3 et 50 nm, et encore de préférence entre 3 et 20 nm.

6. Procédé selon l'une quelconque des revendications 1 à 5, **caractérisé en ce que** les nanoparticules sont choisies parmi des nanoparticules à base de carbone, notamment de noir de carbone ou de graphite ; et/ou des nanoparticules à base de silicium ; et/ou des nanoparticules à base de métal tels que l'aluminium, l'argent, le cadmium, le cérium, le chrome, le cobalt, le cuivre, l'étain, le fer, le gallium, le manganèse, le nickel, l'or, le palladium, le platine, le plomb, le ruthénium, le sélénium, le soufre, le titane, le thorium, le tungstène, l'yttrium, le zinc, le zirconium, et leurs mélanges et alliages, leurs mélanges ; et/ou des nanoparticules à base d'oxyde, d'hydroxyde ou de carbonate minéral, notamment métallique, tel que l'oxyde de cérium, l'oxyde de titane, l'oxyde de silicium tel que la silice, l'oxyde d'aluminium, l'oxyde d'yttrium, l'hydroxyde d'aluminium, l'oxyde de zirconium, l'oxyde d'yttrium, le carbonate d'yttrium, l'oxyde de fer, l'oxyde d'or, l'oxyde d'argent, l'oxyde de palladium, l'oxyde de soufre, l'oxyde de sélénium, l'oxyde de cadmium, l'oxyde de thorium ou encore l'oxyde de chrome ; des nanoparticules organométalliques ; des nanoparticules polymériques telles que des nanoparticules de latex, naturel ou synthétique, de polymère de coordination comme le bleu de Prusse et analogues, ou de biopolymères comme la chitine ; des nanoparticules à base de céramique tel que le nitrure de silicium ; des nanoparticules à base d'argile telle que les smectites, les kaolins, les illites, les chlorites ou les attalpugites ; et/ou des nanoparticules à base de nanotubes pouvant être hybrides et/ou fonctionnalisés, notamment à base de carbone, de nitrure de bore, de sulfure de molybdène, de sulfure de tungstène, de sulfure de cuivre, de chlorure de nickel, de chlorure de cadmium ou d'iodure de cadmium.

7. Procédé selon l'une quelconque des revendications 1 à 6, **caractérisé en ce que** les nanoparticules recouvrent au moins 2%, de préférence entre 5 et 70 %, de préférence entre 20 et 40% et encore de préférence environ 30% de la surface du substrat à recouvrir.

8. Procédé selon l'une quelconque des revendications 1 à 7, **caractérisé en ce que** l'adsorption des nanoparticules est réalisée par immersion du substrat dans une dispersion desdites nanoparticules dans un solvant, et de préférence dans une solution aqueuse, ou par pulvérisation des nanoparticules sur la surface libre du substrat à recouvrir, de préférence suivie par une étape de lavage du substrat et par une étape de séchage.

9. Procédé selon l'une quelconque des revendications 1 à 8, **caractérisé en ce que** le polymère est choisi parmi des polymères thermoplastiques, tels que les polyméthacrylates, comme le polyméthacrylate de méthyle ou le polyméthacrylate d'éthyle, l'oxyde de polyphénylène, le polysulfure de phénylène, le polypropylène ou le polychlorure de vinyle ; des polymères thermodurcissables, tels que les résines époxy, les polycarbonates, les polyimides ou le polydicyclopentadiène ; des élastomères, tels que les silicones comme le polydiméthylsiloxane, les polyuréthanes, le polyisobutylène, le polychloroprène, le polybutadiène ou le polyisoprène ; des polymères naturels, tels que la cellulose, le latex ou l'amidon ; des polyesters, tels que le polyéthylène théréphtalate ; des polyélectrolytes cationiques, tels que la poly-L-lysine ou la polyallylamine ; des polyélectrolytes anioniques, tels que l'acide poly-L-glutamique ou le sulfonate de polystyrène ; des polycétones tels que des poly(aryl éther cétones) ; des polyamides tels que des polyaramides ; des polyacrylonitriles ; des polycyanoacrylates ; des polyéthersulfones ; des polymères et copolymères fluorés tels que le polytétrafluoroéthylène, le polymère d'éthylène-tetrafluoroéthylène, le polychlorotrifluoroéthylène, le perfluoropropylène, le poly(acétate d'heptafluorobutyle), le copolymère de fluorure de vinylidène et de chlorotrifluoroéthylène, le copolymère de fluorure de vinylidène et de perfluoropropène, le poly(ester de 2,2,3,3,4,4-hexafluoropentanediol et de l'acide adipique), ou le 3,3,3-trifluoropropylméthylsilicone ; le polystyrène ; le polyéthylène ; le polyvinylpyrrolidone ; l'acétate de polyvinyle ; des polymères réticulés, branchés ou en étoile ; des copolymères ; des dendrimères ; et les mélanges de ceux-ci.

10. Procédé selon l'une quelconque des revendications 1 à 9, **caractérisé en ce que** le film de polymère comprend des particules métalliques ou polymériques de taille nanométrique ou micrométrique, des pigments ou encore des nanoparticules telles que définies à la revendication 6.

11. Procédé selon l'une quelconque des revendications 1 à 10, **caractérisé en ce que** le dépôt du film de polymère est réalisé par centrifugation, par trempage, par gouttes, par écoulement en flux laminaire ou par pulvérisation.

12. Procédé selon l'une quelconque des revendications 1 à 11, **caractérisé en ce qu'**il comprend, avant le dépôt du film de polymère, une étape supplémentaire de traitement de la surface du substrat à recouvrir destinée à améliorer l'adhérence du film de polymère sur le substrat, telle qu'un traitement par silanisation, par plasma froid ou par UV sous ozone.

13. Procédé selon l'une quelconque des revendications 1 à 12, **caractérisé en ce qu'**il comprend une étape supplémentaire de traitement après dépôt du film de polymère, notamment un traitement thermique comme un recuit du film de polymère à une température supérieure à la température de transition vitreuse du polymère.

14. Substrat revêtu d'un film de polymère susceptible d'être obtenu par un procédé selon l'une quelconque des revendications 1 à 13.

## Patentansprüche

1. Verfahren zur Beschichtung eines Substrats, von dem mindestens eine Abmessung über dem Millimeter liegt, mit einem Polymerfilm, **dadurch gekennzeichnet, dass** vor dem Abscheiden des Polymerfilms Nanopartikel elektrostatisch auf der zu beschichtende Oberfläche des Substrats adsorbiert werden.

2. Verfahren nach Anspruch 1, **dadurch gekennzeichnet, dass** das Substrat eine zu beschichtende metallische Oberfläche, die insbesondere Stahl, Edelstahl, ein Metall wie Aluminium, Gold, Silber, Eisen, Blei, Kupfer, Zink, Nickel, Titan, Wolfram, Chrom, Platin, Kobalt, Zirconium, Molybdän, Zinn, Gallium, Ruthenium, Yttrium und Mangan, eine Legierung wie Messing oder Bronze, oder eine Mischung derselben umfasst; und/oder anorganische Oberfläche, die insbesondere Puzzolanerde, Tonerden, Sand, Kies, Perlit, Vermiculit, Mineralwollen, Graphit oder ein Aluminiumsilikat wie Glimmer, Silizium, Glas, ein Metalloxid wie Saphir, oder eine Mischung derselben umfasst; und/oder polymere Oberfläche, die insbesondere Polytetrafluorethylen, Polydimethylsiloxan, Polycarbonat, Epoxidharz oder Poly(vinylchlorid) umfasst; und/oder metallorganische Oberfläche; und/oder organische Oberfläche wie Cellulose, Holz und dessen Derivate wie Fasern oder Rinde, und Fruchtschalen und Rinden wie eine Kokosnussschale; und/oder Oberfläche aus Keramik umfasst.

3. Verfahren nach einem der Ansprüche 1 und 2, **dadurch gekennzeichnet, dass** die zu beschichtende Oberfläche des Substrats aus einem einzigen, gegebenenfalls durchbrochenen Bereich der Oberfläche des Substrats oder aus einem Satz von mehreren, voneinander getrennten Bereichen besteht.

4. Verfahren nach einem der Ansprüche 1 bis 3, **dadurch gekennzeichnet, dass** das Substrat ein optisches Instrument, wie ein Spiegel, eine Linse oder ein Dämpfungsglied; ein Sensor, wie ein Biosensor oder ein organischer Feldeffekttransistor; ein Rohr, insbesondere Metallrohr, oder eine Platte oder ein Zylinder, insbesondere zum Drucken, ist.

5. Verfahren nach einem der Ansprüche 1 bis 4, **dadurch gekennzeichnet, dass** die mittlere Größe der Nanopartikel im Bereich zwischen 1 und 200 nm, vorteilhafterweise zwischen 2 und 200 nm, bevorzugt zwischen 3 und 50 nm und noch weiter bevorzugt zwischen 3 und 20 nm beträgt.

6. Verfahren nach einem der Ansprüche 1 bis 5, **dadurch gekennzeichnet, dass** die Nanopartikel ausgewählt sind aus Nanopartikeln auf Basis von Kohlenstoff, insbesondere Ruß oder Graphit; und/oder Nanopartikeln auf Basis von Silizium; und/oder Nanopartikeln auf Basis von Metall wie Aluminium, Silber, Cadmium, Cer, Chrom, Kobalt, Kupfer, Zinn, Eisen, Gallium, Mangan, Nickel, Gold, Palladium, Platin, Blei, Ruthenium, Selen, Schwefel, Titan, Thorium, Wolfram, Yttrium, Zink, Zirconium, und deren Mischungen und Legierungen, deren Mischungen; und/oder Nanopartikeln auf Basis von anorganischem, insbesondere Metall-, Oxid, Hydroxid oder Carbonat, wie Ceroxid, Titanoxid, Siliziumoxid wie Siliziumdioxid, Aluminiumoxid, Yttriumoxid, Aluminiumhydroxid, Zirconiumoxid, Yttriumoxid, Yttriumcarbonat, Eisenoxid, Goldoxid, Silberoxid, Palladiumoxid, Schwefeloxid, Selenoxid, Cadmiumoxid, Thoriumoxid oder auch Chromoxid; metallorganischen Nanopartikeln; polymeren Nanopartikeln wie Nanopartikeln aus Natur- oder synthetischem Latex, aus Koordinationspolymer wie Berliner Blau und Analoga, oder aus Biopolymeren wie Chitin; Nanopartikeln auf Basis von Keramik wie Siliziumnitrid; Nanopartikeln auf Basis von Tonerde wie den Smektiten, den Kaolinen, den Illiten, den Chloriten oder den Attalpugiten; und/oder Nanopartikeln auf Basis von Nanoröhrchen, die hybrid und/oder funktionalisiert sein können, insbesondere auf Basis von Kohlenstoff, Bornitrid, Molybdänsulfid, Wolframsulfid, Kupfersulfid, Nickelchlorid, Cadmiumchlorid oder Cadmiumjodid.

7. Verfahren nach einem der Ansprüche 1 bis 6, **dadurch gekennzeichnet, dass** die Nanopartikel mindestens 2 %, bevorzugt zwischen 5 und 70 %, bevorzugt zwischen 20 und 40 %, und noch weiter bevorzugt ungefähr 30 % der zu beschichtende Oberfläche des Substrats beschichten.

8. Verfahren nach einem der Ansprüche 1 bis 7, **dadurch gekennzeichnet, dass** die Adsorption der Nanopartikel durch Eintauchen des Substrats in eine Dispersion der Nanopartikel in einem Lösungsmittel, und bevorzugt in einer wässrigen Lösung, oder durch Aufsprühen der Nanopartikel auf die freie zu beschichtende Oberfläche des Substrats, bevorzugt von einem Schritt des Waschens des Substrats und von einem Schritt des Trocknens gefolgt, ausgeführt wird.

9. Verfahren nach einem der Ansprüche 1 bis 8, **dadurch gekennzeichnet, dass** das Polymer ausgewählt ist aus thermoplastischen Polymeren, wie den Polymethacrylaten wie etwa Polymethylmethacrylat oder Polyethylmethacrylat, Polyphenylenoxid, Polyphenylensulfid, Polypropylen oder Polyvinylchlorid; thermohärtbaren Polymeren wie den Epoxidharzen, den Polycarbonaten, den Polyimiden oder Polydicyclopentadien; Elastomeren, wie den Silikonen wie etwa Polydimethylsiloxan, den Polyurethanen, Polyisobutylen, Polychloropren, Polybutadien oder Polyisopren; natürlichen Polymeren, wie Cellulose, Latex oder Stärke; Polyestern, wie Polyethylenterephthalat; kationischen Polyelektrolyten, wie Poly-L-Lysin oder Polyallylamin; anionischen Polyelektrolyten, wie Poly-L-Glutaminsäure oder Polystyrolsulfonat; Polyketonen, wie Poly(aryletherketonen); Polyamiden, wie Polyaramiden; Polyacrylonitrilen; Polycyanoacrylaten; Polyethersulfonen; fluorierten Polymeren und Copolymeren wie Polytetrafluorethylen, Ethylen-Tetrafluorethylen-Polymer, Polychlortrifluorethylen, Perfluorpropylen, Poly(heptafluorbutyl-acetat), Copolymer von Vinylidenfluorid und Chlortrifluorethylen, Copolymer von Vinylidenfluorid und Perfluorpropen, Poly(ester von 2,2,3,3,4,4-Hexafluorpentandiol und Adipinsäure), oder 3,3,3-Trifluorpropylmethylsilikon; Polystyrol; Polyethylen; Polyvinylpyrrolidon; Polyvinylacetat; vernetzten, verzweigten oder sternförmigen Polymeren; Copolymeren; Dendrimeren; und den Mischungen derselben.

10. Verfahren nach einem der Ansprüche 1 bis 9, **dadurch gekennzeichnet, dass** der Polymerfilm metallische oder polymere Partikel von nanometrischer oder mikrometrischer Größe, Pigmente oder auch Nanopartikel wie in Anspruch 6 definiert umfasst.

11. Verfahren nach einem der Ansprüche 1 bis 10, **dadurch gekennzeichnet, dass** das Abscheiden des Polymerfilms durch Zentrifugation, durch Tränken, durch Tropfen, durch laminares Strömen oder durch Aufsprühen ausgeführt wird.

12. Verfahren nach einem der Ansprüche 1 bis 11, **dadurch gekennzeichnet, dass** es vor dem Abscheiden des Polymerfilms einen zusätzlichen Behandlungsschritt der zu beschichtende Oberfläche des Substrats umfasst, der dazu bestimmt ist, die Adhäsion des Polymerfilms auf dem Substrat zu verbessern, wie eine Behandlung durch Silanisierung, durch kaltes Plasma oder durch UV unter Ozon.

13. Verfahren nach einem der Ansprüche 1 bis 12, **dadurch gekennzeichnet, dass** es einen zusätzlichen Behandlungsschritt nach Abscheiden des Polymerfilms umfasst, insbesondere eine thermische Behandlung wie etwa ein Tempern des Polymerfilms bei einer Temperatur, die über der Glasübergangstemperatur des Polymers liegt.

14. Substrat, das mit einem Polymerfilm beschichtet ist, erhältlich durch ein Verfahren nach einem der Ansprüche 1 bis 13.

**Claims**

1. A process for covering a substrate, at least one dimension of which is greater than one millimetre, with a polymer film, **characterised in that**, prior to the deposition of said polymer film, nanoparticles are adsorbed electrostatically onto the surface of said substrate to be covered.

2. The process according to claim 1, **characterised in that** the substrate comprises a surface to be covered which is metallic, comprising in particular steel, stainless steel, a metal such as aluminium, gold, silver, iron, lead, copper, zinc, nickel, titanium, tungsten, chromium, platinum, cobalt, zirconium, molybdenum, tin, gallium, ruthenium, yttrium and manganese, an alloy such as brass or bronze, or a mixture thereof; and/or mineral, comprising in particular pozzolana, clays, sand, gravels, perlite, vermiculite, mineral wools, graphite or an aluminosilicate such as mica, silicon, glass, a metal oxide such as sapphire, or a mixture thereof; and/or polymer, comprising in particular polytetrafluoroethylene, polydimethylsiloxane, polycarbonate, epoxy resin or polyvinyl chloride; and/or organometallic; and/or organic, such as cellulose, wood and derivatives thereof such as fibres or bark, and fruit shells and skins such as a coconut shell; and/or in ceramic.

3. The process according to any one of claims 1 and 2, **characterised in that** the surface to be covered of the substrate consists in a single area of the surface of the substrate which may optionally be perforated or in a set of several separate areas.

4. The process according to any one of claims 1 to 3, **characterised in that** the substrate is an optical instrument, such as a mirror, a lens or an attenuator; a sensor, such as a biosensor or an organic field-effect transistor; a pipe, in particular made from metal; or a plate or a cylinder, in particular for printing.

5. The process according to any one of claims 1 to 4, **characterised in that** the mean size of the nanoparticles is between 1 and 200 nm, advantageously between 2 and 200 nm, preferably between 3 and 50 nm, and more preferably between 3 and 20 nm.

6. The process according to any one of claims 1 to 5, **characterised in that** the nanoparticles are selected from nanoparticles based on carbon, in particular carbon black or graphite; and/or nanoparticles based on silicon; and/or nanoparticles based on metal such as aluminium, silver, cadmium, cerium, chromium, cobalt, copper, tin, iron, gallium, manganese, nickel, gold, palladium, platinum, lead, ruthenium, selenium, sulphur, titanium, thorium, tungsten, yttrium, zinc, zirconium, and mixtures and alloys thereof, mixtures thereof; and/or nanoparticles based on a mineral, in particular metal, oxide, hydroxide or carbonate, such as cerium oxide, titanium oxide, silicon oxide such as silica, aluminium oxide, yttrium oxide, aluminium hydroxide, zirconium oxide, yttrium oxide, yttrium carbonate, iron oxide, gold oxide, silver oxide, palladium oxide, sulphur oxide, selenium oxide, cadmium oxide, thorium oxide or chromium oxide; organometallic nanoparticles; polymer nanoparticles such as nanoparticles of natural or synthetic latex, of a coordination polymer such as Prussian blue and the like, or of biopolymers such as chitin; nanoparticles based on ceramics such as silicon nitride; nanoparticles based on clays such as smectites, kaolins, illites, chlorites or attapulgites; and/or nanoparticles based on nanotubes which may be hybrid and/or functionalised nanotubes, in particular based on carbon, boron nitride, molybdenum sulphide, tungsten sulphide, copper sulphide, nickel chloride, cadmium chloride or cadmium iodide.

7. The process according to any one of claims 1 to 6, **characterised in that** the nanoparticles cover at least 2%, preferably between 5 and 70%, preferably between 20 and 40% and more preferably approximately 30% of the surface of the substrate to be covered.

8. The process according to any one of claims 1 to 7, **characterised in that** the adsorption of the nanoparticles is carried out by immersing the substrate in a dispersion of said nanoparticles in a solvent, and preferably in an aqueous solution, or by spraying the nanoparticles onto the free surface of the substrate to be covered, preferably followed by a step of washing the substrate and by a drying step.

9. The process according to any one of claims 1 to 8, **characterised in that** the polymer is selected from thermoplastic polymers, such as polymethacrylates, for instance polymethyl methacrylate or polyethyl methacrylate, polyphenylene oxide, polyphenylene sulphide, polypropylene or polyvinyl chloride; thermosetting polymers, such as epoxy resins, polycarbonates, polyimides or polydicyclopentadiene; elastomers, such as silicones, for instance polydimethylsiloxane, polyurethanes, polyisobutylene, polychloroprene, polybutadiene or polyisoprene; natural polymers, such as cellulose, latex or starch; polyesters, such as polyethylene terephthalate; cationic polyelectrolytes, such as poly-L-lysine or polyallylamine; anionic polyelectrolytes, such as poly-L-glutamic acid or polystyrene sulphonate; polyketones such as poly(aryl ether ketones); polyamides such as polyaramides; polyacrylonitriles; polycyanoacrylates; polyethersulphones; fluoropolymers and fluorocopolymers such as polytetrafluoroethylene, ethylene-tetrafluoroethylene polymer, polychlorotrifluoroethylene, perfluoropropylene, poly(heptafluorobutyl acetate), the copolymer of vinylidene fluoride and chlorotrifluoroethylene, the copolymer of vinylidene fluoride and perfluoropropene, the poly(ester of 2,2,3,3,4,4-hexafluoropentanediol and adipic acid), or 3,3,3-trifluoropropylmethylsilicone; polystyrene; polyethylene; polyvinylpyrrolidone; polyvinyl acetate; crosslinked, branched or star polymers; copolymers; dendrimers; and mixtures thereof.

10. The process according to any one of claims 1 to 9, **characterised in that** the polymer film comprises metal or polymer particles of nanometric or micrometric size, pigments, or nanoparticles as defined in claim 6.

11. The process according to any one of claims 1 to 10, **characterised in that** the polymer film is deposited by centrifugation, by dipping, by droplets, by laminar flow or by spraying.

12. The process according to any one of claims 1 to 11, **characterised in that** it comprises, prior to the deposition of the polymer film, an additional step of treating the surface of the substrate to be covered which is intended to improve the adhesion of the polymer film to the substrate, such as a treatment by silanisation, by cold plasma or by UV under ozone.

13. The process according to any one of claims 1 to 12, **characterised in that** it comprises an additional treatment step after the polymer film has been deposited, in particular a heat treatment such as a post cure of the polymer film at a temperature above the glass transition temperature of the polymer.

14. A substrate coated with a polymer film obtainable by a process according to any one of claims 1 to 13.

longueur d'onde (nm)

Figure 1A

Figure 1B

longueur d'onde (nm)

Figure 2A

Figure 2B

Figure 2C

Figure 3

Figure 4A1

Figure 4A2

Figure 4B1

Figure 4B2

Figure 5A1

Figure 5A2

Figure 5B1

Figure 5B2

Figure 6A

Figure 6B

Figure 7A1

Figure 7A2

Figure 7B1

Figure 7B2

Figure 8A1

Figure 8A2

Figure 8B1

Figure 8B2

Figure 9A1

Figure 9A2

Figure 9B1

Figure 9B2

Figure 10A

Figure 10B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007095158 A

- WO 9947253 A

**Littérature non-brevet citée dans la description**

- **SPALLA, O.** *J. of colloid and interface science,* 1997, vol. 192, 43-65